**Europäisches Patentamt**

**European Patent Office**

**Office européen des brevets**

(11) Veröffentlichungsnummer : **0 384 210 B1**

(12) **EUROPÄISCHE PATENTSCHRIFT**

(45) Veröffentlichungstag der Patentschrift :
**02.12.92 Patentblatt 92/49**

(21) Anmeldenummer : **90102335.8**

(22) Anmeldetag : **07.02.90**

(51) Int. Cl.⁵ : **C08L 15/00,** C08L 73/00,
// (C08L15/00, 73:00),
(C08L73/00, 15:00)

(54) **Vernetzbare Mischungen auf Basis von hydriertem Nitrilkautschuk und Ethylen/Kohlenmonoxid-Copolymerisat.**

(30) Priorität : **20.02.89 DE 3905121**

(43) Veröffentlichungstag der Anmeldung :
**29.08.90 Patentblatt 90/35**

(45) Bekanntmachung des Hinweises auf die
Patenterteilung :
**02.12.92 Patentblatt 92/49**

(84) Benannte Vertragsstaaten :
**BE DE FR GB IT NL**

(56) Entgegenhaltungen :
**EP-A- 0 255 594**
**DE-A- 3 229 871**
**FR-A- 2 149 932**
**GB-A- 2 028 837**

(73) Patentinhaber : **BAYER AG**
**W-5090 Leverkusen 1 Bayerwerk (DE)**

(72) Erfinder : **Szentivanyi, Dr.**
**Bayer Japan, Division KA 12-15 Shiba Daimon**
**1-chome Minato, KU Tokyo (JP)**
Erfinder : **Obrecht, Werner, Dr.**
**Holderbergstrasse 108**
**W-4130 Moers 2 (DE)**
Erfinder : **Wassen, Jürgen, Dr.**
**Dürscheider Weg 4**
**W-5090 Leverkusen 3 (DE)**

EP 0 384 210 B1

## Beschreibung

Die Erfindung betrifft Mischungen auf Basis von
1) hydriertem Nitrilkautschuk und
2) Ethylen/Kohlenmonoxid-Copolymerisat,
die Verwendung dieser Mischungen zur Herstellung von Vulkanisaten und diese Vulkanisate selbst.

Aus der DE-OS 32 29 871 sind ölbeständige, (aufgrund ihrer Viskosität) gut,,verarbeitbare Kautschukzusammensetzungen aus 50 bis 98 Gew.-Teilen eines hydrierten Nitrilkautschuks und 2 bis 50 Gew.-Teilen eines flüssigen Copolymerisats, z. B. eines Butadien/Acrylnitril-Copolymerisats, bekannt. Die aus diesen Zusammensetzungen hergestellten Vulkanisate sollen eine hohe Lösungsmittelbeständigkeit aufweisen. Diese wünschenswerte Eigenschaft wird allerdings durch verschlechterte mechanische Eigenschaften erkauft; vergl. DE-OS 32 29 871, Tabelle IV, Vergleich 2 und Beispiel 6.

Aus GB-A-20288837 sind vernetzbare Mischungen auf Basis von Butadien/Acrylnitrilpolymeren und einem Ethylen-Copolymeren bekannt, in denen das Ethylen-Copolymere Kohlenmonoxid oder Schwefeldioxid sowie zusätzlich noch andere copolymerisierbare Comonomere enthält. Die in der genannten Patentanmeldung beschriebenen vernetzbaren Mischungen sollen u.a. gute Verarbeitungseigenschaften sowie eine gute Ölbeständigkeit aufweisen. Das Gesamteigenschaftsbild der mechanischen Eigenschaften ist allerdings noch verbesserungsbedürftig.

Überraschenderweise wurde nun gefunden, daß Kautschukmischungen aus
1) hydriertem Nitrilkautschuk und
2) Ethylen/Kohlenmonoxid-Copolymerisat, das zusätzlich copolymerisierte Einheiten mindestens eines weiteren Monomeren enthält,
gut verarbeitbar sind und Vulkanisate mit guten mechanischen Eigenschaften und hervorragenden Oberflächen ergeben.

Gegenstand der Erfindung sind also Mischungen aus
1. 40 bis 98, vorzugsweise 60 bis 95, Gew.-%, bezogen auf die Summe der Komponenten 1) und 2), hydriertem Nitrilkautschuk und
2. 2 bis 60, vorzugsweise 5 bis 40, Gew.-%, bezogen auf die Summe der Komponenten 1) und 2), Ethylen/Kohlenmonoxid-Copolymerisat,
    wobei dieses Ethylen/Kohlenmonoxid-Copolymerisat 2) copolymerisierte Einheiten von
a) 30 bis 94 Gew.-% Ethylen,
b) 3 bis 30 Gew.-% Kohlenmonoxid und
c) 3 bis 67 Gew.-% mindestens eines polaren weiteren olefinisch ungesättigten Monomeren
    enthält und die Prozentangaben zu a), b) und c) auf das Ethylen/Kohlenmonoxid-Copolymerisat 2) bezogen sind.

Die Hydrierung von Nitrilkautschuk ist bekannt; US-A-3 700 637, DE-OS 25 39 132, 30 46 008, 30 46 251, 32 27 650, 33 29 974, EP-A 111 412, FR-A-2 540 503. Hydrierter Nitrilkautschuk zeichnet sich vor allem durch vergleichsweise hohe Stabilität gegen Oxidation aus.

Den hydrierten Nitrilkautschuken 1) liegen Butadien/Acrylnitril-Copolymerisate mit einem Gehalt an copolymerisiertem Acrylnitril von 10 bis 60, vorzugsweise 20 bis 50 Gew.-%, zugrunde. "Hydriert" im Sinne der Erfindung bedeutet, daß sowohl teilhydrierte Nitrilkautschuke bei denen mindestens 80, vorzugsweise zwischen 85 % und 95 % der Doppelbindungen hydriert sind, sowie vollhydrierte Nitrilkautschuke, bei denen vorzugsweise mindestens 95 %, insbesondere mindestens 99 % der hydrierbaren C=C-Doppelbindungen (d. h in der Regel: der vom Butadien stammenden Einheiten) hydriert sind, während die C≡N-Dreifachbindungen der Nitrilgruppen im wesentlichen, d. h. zu mindestens 90 % der ursprünglich vorhandenen Nitrilgruppen, unhydriert bleiben. Der Hydriergrad kann IR- oder NMR-spektroskopisch sowie mit üblichen chemischen Methoden bestimmt werden.

Die hydrierten Nitrilkautschuke 1) besitzen in der Regel Mooney-Viskositäten (DIN 53 523) von 10 bis 150, vorzugsweise 25 bis 120 (ML 1 + 4) 100° C.

Für die Herstellung des Ethylencopolymerisats 2) geeignete polare Comonomere c) enthalten mindestens ein Heteroatom pro Molekül, d. h. mindestens ein Atom, das von Kohlenstoff und Wasserstoff verschieden ist, vorzugsweise Sauerstoff, Stickstoff, Halogen (wie Fluor, Chlor, Brom) Bevorzugte polare Comonomere c) umfassen Acrylsäure und Methacrylsäure, Acrylsäure- und Methacrylsäure-$C_1$-$C_8$-alkylester (vorzugsweise Methylacrylat, Ethylacrylat, Butylacrylat, Methylmethacrylat), Acrylsäure- und Methacrylsäure-allylester, Acrylsäure- und Methacrylsäure-hydroxymethylester, Acrylsäure- und Methacrylsäure-β-chlorethylester, Acrylamid und Methacrylamid, N-Methylolacrylamid und -methacrylamid, Acrylnitril und Methacrylnitril, Vinylchlorid und Vinylidenchlorid und insbesondere Ester des Vinylalkohols mit $C_1$-$C_4$-Carbonsäuren, vorzugsweise Vinylacetat.

Das Ethylencopolymerisat 2) kann nach dem Masse-Hochdruckverfahren bei Drucken von 500 bis 5.000, vorzugsweise 1.000 bis 3.000, bar und Temperaturen von 50 bis 450° C, vorzugsweise von 120 bis 450° C, hergestellt werden. Geeignet für die Herstellung des Ethylencopolymerisates 2) sind auch Lösungsverfahren.

Das Verfahren zur Herstellung der Ethylencopolymerisate 2) kann durch radikalbildende Substanzen initiiert werden. Zu den geeigneten Polymerisationsinitiatoren zählen diejenigen Verbindungen, die auch für die Hochdruckhomopolymerisation des Ethylens eingesetzt werden. Geeignet ist beispielsweise Sauerstoff, vorzugsweise in Mengen von 10 bis 1000 Mol.-ppm, bezogen auf zu polymerisierende Monomere. Andere bevorzugte Polymerisationsinitiatoren sind z.B. Azoverbindungen wie Azo-bisisobutyronitril sowie Peroxide, Hydroperoxide und ihre Mischungen, vor allem aber Mischungen von Sauerstoff und Peroxiden und/oder Hydroperoxiden. Bevorzugte Peroxide und Hydroperoxide umfassen tert.-Butylperpivalat, Di-tert.-butylperoxid, tert.-Butylhydroperoxid, tert.-Butylperbenzoat, Dilauroylperoxid, tert.-Butylperisooctanoat und tert.-Butylperisononanat. Besonders geeignet sind die Peroxide Di-tert.-butylperoxid, tert.-Butylperpivalat und tert.-Butylperisononanat.

Die Konzentration des zudosierten Initiators liegt im allgemeinen zwischen 0,001 bis 100 Mol-ppm, bevorzugt 0,1 bis 30 Mol-ppm, bezogen auf gesamte, der Polymerisation zugeführte Monomere. Als geeignetes Lösungsmittel für den Initiator werden zweckmäßig aliphatische Kohlenwasserstoffe wie Octan oder Benzin verwendet. Es können aber auch andere inerte Lösungsmittel wie Chlorbenzol, Cyclohexan oder Methanol eingesetzt werden.

Die üblichen Regler, z.B. Kohlenwasserstoffe wie Propan, Propen, iso-Octan, Ketone wie Aceton, Ethylmethylketon, Aldehyde wie Propionaldehyd wirken auch hier regelnd. Man verzichtet deshalb vorzugsweise auf die Zugabe solcher Substanzen. Ist ihre Verwendung, z.B. als Lösungsmittel für den Initiator oder für die Spülung von Rührwellen, unumgänglich, so kann der regelnde Einfluß dieser Verbindungen durch Zudosierung der üblichen Vernetzer kompensiert werden.

Die Polymerisation erfolgt normalerweise unter adiabatischen Reaktionsbedingungen in kontinuierlichem Verfahren. Als Reaktor kann ein Rührautoklav oder eine Kaskade solcher Autoklaven verwendet werden. Für die Durchführung des Verfahrens ist auch ein Rohrreaktor oder eine Kombination aus einem Rührautoklaven und einem Rohrreaktor geeignet. Besonders bevorzugt wird die Serienfahrweise mit mehreren Rührautoklaven.

Das Ethylencopolymerisat 2) kann beispielsweise folgendermaßen aufgearbeitet werden: Im Anschluß an die Polymerisation wird das Reaktionsgemisch in eine Hochdruckprodukttrennzone geleitet, in der ein Druck zwischen 100 und 500 bar und eine Temperatur zwischen 150 und 300° C herrscht. In diesem Hochdruckproduktabscheider wird das im Reaktor erhaltene Copolymerisat von nicht polymerisierten Monomeren abgetrennt. Aus dem Hochdruckproduktabscheider wird das Copolymerisat in die Niederdruckprodukttrennzone, in der ein Druck von unter 10 bar herrscht, geführt.

Vom Niederdruckproduktabscheider wird das erhaltene Produkt über ein Austragsaggregat geführt, abgekühlt und granuliert. Bevorzugt ist die Verwendung eines Unterwassergranulators, wobei das eingesetzte Wasser Zusätze zur Reduktion der Verklebungstendenz der Granulate enthalten kann.

Bevorzugt ist außerdem, daß das Produkt nach dem Niederdruckabscheider in einem geeigneten Lösungsmittel, wie z.B. chlorierten Kohlenwasserstoffen (Chlorbenzol, Dichlorbenzol, Methylenchlorid usw.), Ketonen wie z.B. Aceton, Methylethylketon usw. oder Ethern, wie z.B. Tetrahydrofuran, Dioxan usw. gelöst, mit einer Lösung hydrierten Nitrilkautschuks gemischt und dann als Polymerblend isoliert wird.

Die Ethylencopolymerisate 2) besitzen vorzugsweise Gelgehalte unter 0,2 Gew.-%, bezogen auf Copolymerisat und bestimmt als unlöslicher Rückstand nach 24-stündiger Extraktion mit Chlorbenzol im Soxhlet-Aufsatz. Qualitativ können Gelanteile sehr leicht als Oberflächenrauhigkeit extrudierter Copolymerisatstränge mit Durchmessern von 2 bis 5 mm erkannt werden.

Der Schmelzflußindex (MFI) der Ethylencopolymerisate 2) liegt in der Regel zwischen 0,1 g/10 min (gemessen bei 190° C/2,16 kp) und 100 g/10 min (gemessen bei 120° C/2,16 kp); ihre als Zahlenmittel $\overline{M}_n$ bestimmten Molekulargewichte liegen im Bereich von 15 000 bis 500 000, ihre Mooney-Viskositäten gemäß DIN 53 523 betragen im allgemeinen 1 bis 120, vorzugsweise 1 bis 100 (ML 1 + 4) 100° C.

Das Mischen der Komponenten kann auf üblichen Mischaggregaten erfolgen.

Bevorzugte Mischaggregate sind die in der Kautschukindustrie üblichen Kneter, Walzen, Innenmischer und Mischextruder, die in der Regel mit Scherraten von 1 bis 1.000 $sec^{-1}$, vorzugsweise 2 bis 200, $sec^{-1}$ arbeiten.

Den erfindungsgemäßen Mischungen können übliche Füllstoffe und Hilfsmittel, wie beispielsweise Weichmacher, Harze, Faktisse und Stabilisatoren zur Erzielung bestimmter Rohmischungs- oder Vulkanisateigenschaften zugesetzt werden.

Für die meisten Anwendungen setzt man die erfindungsgemäßen Mischungen in vulkanisierter Form ein. Die Vulkanisation kann - gegebenenfalls nach Zugabe von Füllstoffen, Stabilisatoren - z. B. durch energiereiche Strahlung oder durch Vernetzung mit Peroxiden, mit mehrfunktionellen, vernetzend wirkenden Verbindungen (wie z. B. Triallylcyanurat, Triallylisocyanurat, Bismaleinimiden oder Divinylbenzol) oder - vorzugsweise - mit einem Schwefelvulkanisiersystem erfolgen.

Das Vulkanisiermittel, das den erfindungsgemäßen Mischungen zugegeben und darin dispergiert werden kann, ist üblicherweise eines der für die Kautschukvulkanisation bekannten Mittel wie Schwefel und/oder Schwefelspender. Ausführliche Beschreibungen von Schwefelvulkanisiersystemen finden sich bei W. Hofmann, "Vulkanisation und Vulkanisationshilfsmittel", Verlag Berliner Union GmbH, Stuttgart 1965 und bei Alliger und Sjothun, "Vulcanization of Elastomers", Reinhold Pub. Corp. New York 1964. Geeignete Schwefelspender umfassen Thiurampolysulfide wie z.B. Dipentamethylenthiuramtetra- und hexasulfid, Tetramethylthiuramdisulfid; Amindisulfide wie z.B. Dimorpholyldisulfid; Natriumpolysulfide und Thioplaste. Die Mengen an Vulkanisiermittel können innerhalb weiter Grenzen variieren. Im allgemeinen verwendet man 0,2 bis 5 Gew.-Teile Schwefel oder 0,6 bis 15 Gew.-Teile Schwefelspender pro 100 Gewichtsteilen Mischung aus 1) und 2).

Bevorzugte Schwefelvulkanisiersysteme enthalten

a) Schwefel oder Schwefelspender,

b) gegebenenfalls Vulkanisationsbeschleuniger und

c) gegebenenfalls einen oder mehrere Aktivatoren.

Als Menge a) verwendet man in der Regel 0,2 bis 3,0 Gew.-% Schwefel (im Falle von Schwefelspender: berechnet als freiwerdender Schwefel), bezogen auf Kautschuk 1).

Die Vulkanisationsbeschleuniger b) verwendet man im allgemeinen in Mengen von 1 bis 3,5 Gew.-%, bezogen auf Kautschuk 1). Bevorzugte Vulkanisationsbeschleuniger b) umfassen Thiazolbeschleuniger wie

2-Mercaptobenzothiazol,

Dibenzothiazyl-disulfid,

Benzothiazyl-2-cyclohexylsulfenamid (CBS),

Benzothiazyl-2-tert.-butylsulfenamid (TBBS),

N-Morpholinothio-2-benzothiazol (MBS),

Benzothiazyl-2-diisopropylsulfenamid (DIBS),

Benzothiazyl-2-tert.-amylsulfenamid (AMZ),

Benzothiazyl-dicyclohexylsulfenamid (DCBS) und

Morpholino-thiocarbonyl-sulfenmorpholid (OTOS).

Weitere bevorzugte Vulkanisationsbeschleuniger b) umfassen Diphenylguanidin (DPG) und Di-o-tolylguanidin (DOTG); Thiurame wie Thiurammono- und -disulfide; und Dithiocarbamate.

Die bedeutendsten Aktivatoren c) sind die Metalloxide, insbesondere Zinkoxid. In einzelnen Fällen wird auch Magnesiumoxid oder Calciumhydroxid verwendet.

"Vulkanisiert" im Sinne der Erfindung bedeutet, daß bei 10stündiger Extraktion im Soxhlet-Aufsatz mit Toluol als Extraktionsmittel weniger als 10, vorzugsweise weniger als 5, Gew.-%, bezogen auf die Summe der Komponenten 1) und 2), extrahierbar ist.

Die Vulkanisation kann bei Temperaturen von 100 bis 200° C, vorzugsweise 130 bis 180° C, gegebenenfalls unter einem Druck von 10 bis 200 bar, erfolgen.

Die hervorragenden Vulkanisateigenschaften werden in der Regel schon ohne Temperung erreicht, lassen sich aber durch Tempern manchmal noch verbessern.

Die erhaltenen Vulkanisate können in Gestalt jeglicher denkbarer Formkörper (Schläuche, Dichtungen, Antriebselemente, wie Zahn- und Keilriemen oder Kabelmäntel) Verwendung finden.

Die in den nachfolgenden Beispielen genannten Teile sind Gewichtsteile, Prozentangaben bedeuten Gew.-%.

Beispiele

Als hydrierter Nitrilkautschuk 1) (HNBR) wurde das Hydrierungsprodukt eines Ethylen/Acrylnitril-Copolymerisats mit einem Acrylnitrilgehalt von 34 % und einem Hydriergrad der C=C-Doppelbindungen von 96 % eingesetzt. Der teilhydrierte Nitrilkautschuk besaß eine Mooney-Viskosität von 72 (ML 1 + 4) 100°C.

Als Ethylencopolymerisat 2) (EVACO) wurde ein Copolymerisat mit einer Mooney-Viskosität von 3 (ML 1 + 4) 100° C und einem Gehalt an copolymerisierten Einheiten von 73 Gew.-% Ethylen, 21 Gew.-% Kohlenmonoxid und 6 Gew.-% Vinylacetat verwendet.

Die Komponenten wurden auf einem Kneter gemischt und 15 Minuten bei 170° C vulkanisiert. Die Rezepturen und die gemessenen Werte sind der folgenden Tabelle zu entnehmen.

Beispiele

| | Vergleich | 1 | 2 | 3 |
|---|---|---|---|---|
| HNBR | 100 | 90 | 75 | - |
| EVACO | - | 10 | 25 | 100 |
| Schwefel | 0,5 | 0,5 | 0,5 | 0,5 |
| ZnO | 3,0 | 3,0 | 3,0 | 3,0 |
| Ruß | 45,0 | 45,0 | 45,0 | 45,0 |
| Octyliertes Diphenylamin | 1,5 | 1,5 | 1,5 | 1,5 |
| Zinksalz des Mercapto-imidazols | 2,0 | 2,0 | 2,0 | 2,0 |
| BPH* | 0,5 | 0,5 | 0,5 | 0,5 |
| TMTD** | 2,0 | 2,0 | 2,0 | 2,0 |
| CBS*** | 0,5 | 0,5 | 0,5 | 0,5 |
| Mischungsmooney [ML 1+4/100°C] | 112 | 98 | 82 | 18 |
| Zugfestigkeit [MPa] | 32 | 31 | 29 | 8 |
| Bruchdehnung [%] | 505 | 515 | 500 | 340 |
| Spannungswert bei 100 % Dehnung [MPa] | 3,7 | 3,9 | 4,4 | 5,2 |
| Härte [Shore A] | 71 | 73 | 76 | 87 |
| Compression Set 70$^h$/70°C [%] | 41 | 41 | 40 | 80 |
| Weiterreißwiderstand [cN] | 225 | 230 | 240 | 170 |
| Oberfläche | matt | glän-zend | glän-zend | glän-zend |

* BPH = 2,2'-Methylen-bis-(4-methyl-6-tert.-butyl)-phenol

** TMTD = Tetramethylthiuramdisulfid

*** CBS = Benzthiazylcyclohexylsulfenamid

Die Erniedrigung der Viskosität und die günstigen mechanischen Werte der erfindungsgemäßen Beispiele gegenüber dem Vergleich sind Ausdruck der Covernetzung von HNBR und EVACO.

**Patentansprüche**

1. Mischungen aus

   1. 40 bis 98 Gew.-%, bezogen auf die Summe der Komponenten 1) und 2), hydriertem Nitrilkautschuk und

   2. 2 bis 60 Gew.-%, bezogen auf die Summe der Komponenten 1) und 2), Ethylencopolymerisat, wobei dieses Ethylencopolymerisat 2) copolymerisierte Einheiten von

   a) 30 bis 94 Gew.-% Ethylen,

   b) 3 bis 30 Gew.-% Kohlenmonoxid und

   c) 3 bis 67 Gew.-% mindestens eines polaren weiteren olefinisch ungesättigten Monomeren enthält und die Prozentangaben zu a), b) und c) auf das Ethylencopolymerisat 2) bezogen sind.

2. Mischungen nach Anspruch 1 aus 60 bis 95 Gew.-% hydriertem Nitrilkautschuk 1) und 5 bis 40 Gew.-% Ethylencopolymerisat 2).

3. Mischungen nach Ansprüchen 1 und 2, wobei dem hydriertem Nitrilkautschuk 1) Butadien/Acrylnitril-Copolymerisate mit einem Gehalt an copolymerisiertem Acrylnitril von 10 bis 60 Gew.-% zugrunde liegen und wobei 85 bis 95 % der Doppelbindungen hydriert sind (teilhydrierte Nitrilkautschuke) oder mindestens 95 % (vollhydrierte Nitrilkautschuke).

4. Mischungen nach Ansprüchen 1 bis 3, wobei das Ethylencopolymerisat 2) als copolymerisierte Einheiten eines polaren Monomeren c) Vinylacetateinheiten enthält.

5. Verwendung der Mischungen nach Ansprüchen 1 bis 4 zur Herstellung von Vulkanisaten.

6. Aus den Mischungen nach Ansprüchen 1 bis 4 hergestellte Vulkanisate.

**Claims**

1. Mixtures of

   1. 40 to 98% by weight, based on the sum of components 1) and 2), hydrogenated nitrile rubber and

   2. 2 to 60% by weight, based on the sum of components 1) and 2), ethylene copolymer, the ethylene copolymer 2) containing copolymerized units of

   a) 30 to 94% by weight ethylene,

   b) 3 to 30% by weight carbon monoxide and

   c) 3 to 67% by weight of at least one polar, other olefinically unsaturated monomer and the percentages a), b) and c) being based on the ethylene copolymer 2).

2. Mixtures as claimed in claim 1 of 60 to 95% by weight hydrogenated nitrile rubber 1) and 5 to 40% by weight ethylene copolymer 2).

3. Mixtures as claimed in claims 1 and 2, in which the hydrogenated nitrile rubber 1) is based on butadiene/acrylonitrile copolymers containing 10 to 60% by weight copolymerized acrylonitrile and 85 to 95% of the double bonds are hydrogenated (partly hydrogenated nitrile rubbers) or at least 95% thereof are hydrogenated (fully hydrogenated nitrile rubbers).

4. Mixtures as claimed in claims 1 to 3, in which the ethylene copolymer 2) contains vinyl acetate units as copolymerized units of a polar monomer c).

5. The use of the mixtures claimed in claims 1 to 4 for the production of vulcanizates.

6. Vulcanizates produced from the mixtures claimed in claim 1.

**Revendications**

1. Mélanges de

   1. 40 à 98% en poids par rapport à la somme des composants 1) et 2), de caoutchouc nitrile hydrogéné et

2. 2 à 60% en poids par rapport à la somme des composants 1) et 2) de copolymère d'éthylène, ce copolymère d'éthylène 2) contenant des unités copolymérisées de

    a) 30 à 94% en poids d'éthylène,

    b) 3 à 30% en poids de monoxyde de carbone, et

    c) 3 à 67% en poids d'au moins un monomère polaire à insaturation oléfinique,

et les pourcentages de a), b) et c) s'entendant par rapport au copolymère d'éthylène 2).

2. Mélanges selon la revendication 1, de 60 à 95% en poids de caoutchouc nitrile hydrogéné 1) et 5 à 40% en poids de copolymère d'éthylène 2).

3. Mélanges selon les revendications 1 et 2, dans lesquels le caoutchouc nitrile hydrogéné 1) est à base de copolymères de butadiène/acrylonitrile avec une teneur de 10 à 60% en poids d'acrylonitrile Copolymérisé et dans lesquels les doubles liaisons sont hydrogénées à raison de 85 à 95% (caoutchoucs nitriles partiellement hydrogénés), ou dans lesquels ces liaisons sont hydrogénées à raison d'au moins 95% (caoutchoucs nitriles complètement hydrogénés).

4. Mélanges selon les revendications 1 à 3, dans lesquels le copolymère d'éthylène 2) contient, comme unités copolymérisées d'un monomère polaire c), des unités acétate de vinyle.

5. Utilisation des mélanges selon les revendications 1 à 4 pour la fabrication de vulcanisats.

6. Vulcanisats fabriqués à partir des mélanges des revendications 1 à 4.